# FASCICULE DE BREVET EUROPEEN

(11) **EP 1 632 309 B1**
(45) Date de publication et mention de la délivrance du brevet: **20.06.2007**
(21) Numéro de dépôt: 04104282.1
(22) Date de dépôt: 06.09.2004
(51) Int. Cl.: B23Q 39/04, B23B 3/30

(54) **Dispositif d'usinage en contre-opération dans un tour multibroches**
Vorrichtung zur Bearbeitung mit Gegenspindel in einer Mehrspindeldrehmaschine
Machining device with counterspindle in a multispindle lathe

(43) Date de publication de la demande: 08.03.2006
(73) Titulaire: Tornos SA, 2740 Moutier (CH)
(72) Inventeur: Simonin, Jean-Claude, 2740 Moutier (CH)
(74) Mandataire: BOVARD AG

(56) Documents cités:
- EP-A1- 0 573 678
- EP-A1- 0 936 027
- EP-A2- 1 340 569
- US-A- 5 768 962

## Description

L'invention concerne l'usinage en contre-opération sur une machine-outil à barillet et notamment un dispositif tel que décrit dans le préambule de la revendication 1 (voir, par exemple, EP-0936027-A).

On entend par contre-opération toute opération d'usinage faite sur une portion dite arrière d'une pièce à usiner, après qu'une autre portion dite avant de ladite pièce ait été usinée de manière conventionnelle.

Une contre-opération peut concerner aussi bien un usinage extérieur qu'un usinage intérieur de ladite portion arrière.

Pour effectuer une contre-opération sur une pièce, il est nécessaire de retirer la pièce, maintenue par sa portion arrière dans une pince d'une broche porte-pièce, pour la fixer, par sa portion avant, dans une autre pince d'une autre broche porte-pièce.

Dans le cas où la machine-outil est multibroche, par exemple un tour automatique ou une décolleteuse, diverses solutions ont été proposées à cet effet.

La solution conventionnelle consiste à reprendre l'usinage de la portion arrière de la pièce sur une autre machine ou ultérieurement sur la même machine.

Cette solution nécessite une importante manutention des pièces à usiner ainsi que deux machines ou alors augmente fortement le temps de production si une seule machine est utilisée pour les deux types d'opérations.

Selon une autre possibilité, lorsque la pièce, fixée par sa portion arrière arrive en position d'extraction dans le cas d'un tour automatique ou en position de coupe dans le cas d'une décolleteuse, une contre-broche est avancée en face de la portion avant de la pièce, celle-ci est saisie par la pince de la contre broche, puis est relâchée par la pince de la broche principale dans le cas d'un tour automatique ou alors est coupée dans le cas d'une décolleteuse. Ensuite, successivement, la contre-broche est reculée, un outil de contre-opération est mis en place, la contre-broche est avancée en position de travail, puis l'usinage de contre-opération est effectué. Après ceci, la contre-broche est reculée, l'outil est dégagé, la pince de la contre-broche est desserrée et la pièce en est extraite.

On comprend facilement que cette suite d'opérations prend un certain temps, souvent plus long que le temps d'opération le plus long sur la portion avant de la pièce, notamment quand l'usinage de la portion arrière en contre-opération comprend plusieurs opérations d'usinage, nécessitant des mouvements d'approche et de retrait de plusieurs outils.

Ceci a pour conséquence que le temps de contre-opération correspond alors au temps de cycle.

Il est aussi possible d'avoir plus d'une contre-broche utilisée pour des contre-opérations identiques, par exemple deux contre-broches, DE-A-20006817U, afin de diminuer les inconvénients mentionnés.

Par contre cette solution nécessite l'utilisation de deux postes d'usinage sur le barillet, limitant d'autant les postes d'usinages disponibles pour la portion avant sur ce barillet.

Une autre solution consiste à retourner la pièce dans la pince de la broche porte-pièce.

Cette solution comprend aussi des inconvénients, à savoir qu'éventuellement plusieurs postes d'usinage sont à prévoir pour les opérations d'usinage sur la portion arrière de la pièce, diminuant d'autant les postes d'usinage disponibles pour les opérations d'usinage sur la portion avant.

D'autre part un poste spécial doit être prévu pour le retournement de la pièce, ce poste étant difficile à réaliser dans le cas de pièces courtes.

Souvent il est indispensable d'arrêter la broche en rotation pour le retournement, ce qui est pénalisant sur le temps d'opération.

Une autre solution, WO-A-03/103892, consiste à saisir la pièce lorsqu'elle est en position d'extraction ou de coupe, puis de la transporter par un moyen de transport automatique vers un appareil auxiliaire sur lequel les usinages en contre-opérations sont effectués.

Cette solution comporte notamment comme inconvénients, l'encombrement de la zone de travail par le moyen de transport de pièce et le risque élevé de collision.

Encore une autre solution, FR-A-2303626, consiste à construire une machine-outil symétrique, c'est-à-dire comportant deux barillets alignés sur le même axe, soit montés sur une même glissière centrale, un premier barillet portant les broches porte-pièces pour l'usinage des portions avant alors que le deuxième barillet porte les broches porte-pièces pour l'usinage des portions arrières, les deux barillets portant le même nombre de broches et étant indexés simultanément sur l'axe commun.

Bien que cette solution s'affranchisse de nombreux inconvénients des dispositifs décrits plus avant, elle comporte aussi des inconvénients, car la course des broches du deuxième barillet étant limitée, la place disponible pour l'usinage entre les deux barillets est conséquemment limitée, ce qui rend difficile le montage et l'utilisation d'outils d'usinage tournants.

Un premier but que l'invention vise à atteindre est une configuration de dispositif d'usinage en contre-opération qui libère la zone d'usinage de la machine-outil et permet d'augmenter sa capacité à réaliser de nombreux usinages sur une même pièce tout en réduisant le temps attribué à la production de chaque pièce.

Un autre but de l'invention est de proposer une machine-outil multibroche équipée du dispositif précité.

Le premier de ces buts est obtenu par un dispositif d'usinage tel que décrit dans la revendication 1, des formes de réalisation particulières et des variantes de ces formes de réalisation étant décrites dans les revendications dépendantes.

Le deuxième de ces buts est obtenu par une machine-outil conforme à la revendication 13.
La figure 1 montre, vue de dessus, schématiquement et en coupe partielle, une machine-outil équipée d'un dispositif selon l'invention.
La figure 2 est une vue selon un plan transversal F-F de la machine-outil de la figure 1, selon une première forme de réalisation,
La figure 3 est une vue selon un plan transversal d'une machine-outil du type de celle de la figure 1, selon une deuxième forme de réalisation,
La figure 4 est une vue selon un plan transversal d'une machine-outil du type de celle de la figure 1, selon une troisième forme de réalisation,
La figure 5 est une vue selon un plan transversal d'une machine-outil du type de celle de la figure 1, selon une variante de la première forme de réalisation,
La figure 6 est une vue selon un plan transversal d'une machine-outil du type de celle de la figure 1, selon une deuxième variante de la première forme de réalisation.

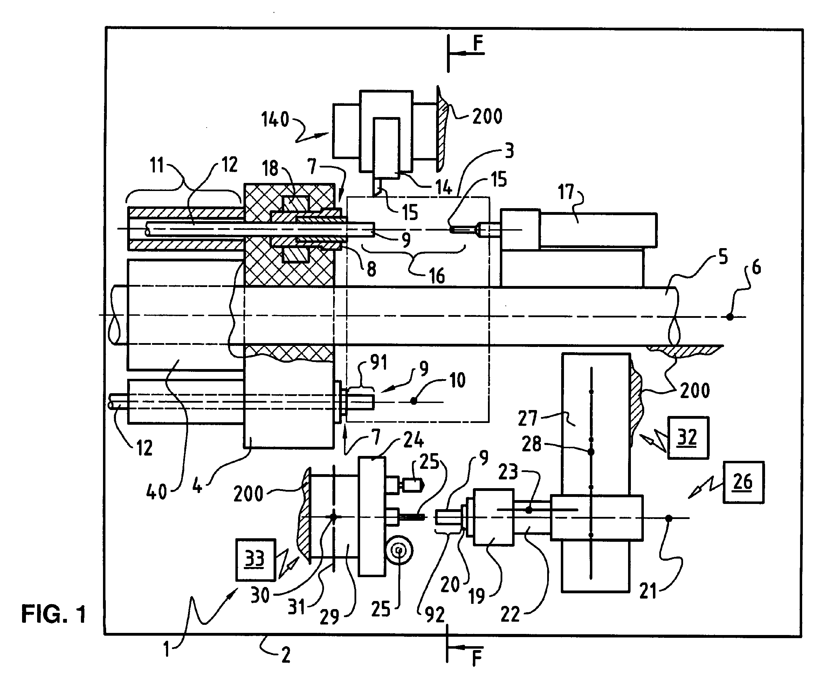

Sur les figures 1 à 6 on voit une portion 1 d'une machine-outil 2, notamment autour d'une zone, dite zone d'usinage 3, dans laquelle des opérations d'usinage sont effectuées sur des pièces 9.

La machine-outil 2 est symbolisée par un rectangle repéré 2.

La machine-outil 2 comprend une structure 200, tel un bâti 200, mais, sur les dessins, le bâti 200 n'a pas été intégralement représenté et seules des portions de ce bâti 200 ont été schématisées. Le repère 200 est donc associé à ces portions du fait de leur appartenance au bâti 200.

La machine-outil 2 est une décolleteuse du type à barillet 4 et, dans l'exemple représenté, comprend un dispositif ravitailleur 11 situé en arrière dudit barillet 4. Cette association est bien connue et couramment utilisée.

Le dispositif ravitailleur 11 n'a pas non plus été représenté en détails car cela n'a pas d'incidence sur l'invention.

Classiquement, le barillet 4 porte une pluralité de broches 7 munies chacune d'une première pince 8 destinée à serrer une pièce 9 constituée par l'extrémité d'une barre 12, pour permettre l'usinage d'une partie avant 91 de cette pièce 9, notamment, lors de la rotation de ladite pièce 9 autour d'un deuxième axe 10, la rotation du barillet 4 autour d'un premier axe 6 étant, par un ensemble moteur 40, commandée d'une manière fractionnée, notamment dans un sens premier prédéterminé S1, de manière à présenter les broches 9 devant différents postes d'usinage 16 dont les situations angulaires sont prédéfinies.

Lors de l'usinage, la pièce 9 et l'extrémité de la barre 12 ne sont pas distinctes dans un premier temps, et ce n'est qu'après réalisation d'un certain nombre d'usinages que la pièce 9 est effectivement prélevée dans la barre 12.

Cela n'apparaît pas clairement sur les dessins, mais est largement connu de l'homme du métier.

La machine-outil 2 représentée permet d'usiner des pièces 9 prélevées dans des barres 12, mais l'invention s'applique également au cas où les pièces 9 ont été préalablement chargées dans le barillet 4.

Dans le cas de l'exemple considéré, chaque partie avant 91 d'une pièce 9 consiste en l'extrémité d'une barre 12 fournie par le dispositif ravitailleur 11, ladite barre 12 étant serrée dans la première pince 8, en arrière de la partie avant 91 de cette pièce 9.

Tel que cela a été indiqué plus avant, plusieurs blocs d'usinage 14, dits blocs d'usinage avants 14, portant chacun au moins un premier outil d'usinage 15, sont prévus pour l'usinage par exemple radial de la partie avant 91 à des postes d'usinage 16 correspondant aux diverses broches 7.

Les blocs d'usinage avants 14 sont, par exemple, montés sur des coulisses croisées 140.

De même des blocs d'usinage avants 14 portant chacun au moins un premier outil d'usinage 15 déplaçable en translation axialement à la pièce 9 par l'effet d'un vérin 17, peuvent être prévus pour un usinage axial de la partie avant 91, aux mêmes postes d'usinage 16 que ceux cités précédemment.

Le vérin 17 peut être de tout type connu et, à titre d'exemple, consister en un vérin hydraulique ou en un vérin à vis.

Les premiers outils d'usinage 15 peuvent être fixes ou tournants et peuvent être prévus pour un usinage intérieur ou extérieur de la partie avant 91 de la pièce 9.

Chacune des broches 7 peut être munie de moyens 18 de mise en rotation qui, parce que d'une technique de type connu, non pas été représentés en détails.

Comme indiqué, l'indexation du barillet 4 est réalisée par un ensemble moteur 40 de manière telle que, par sa rotation dans ledit premier sens S1 prédéterminé, les broches 7 que ce barillet 4 porte soient successivement présentées à chacun des postes d'usinage 16.

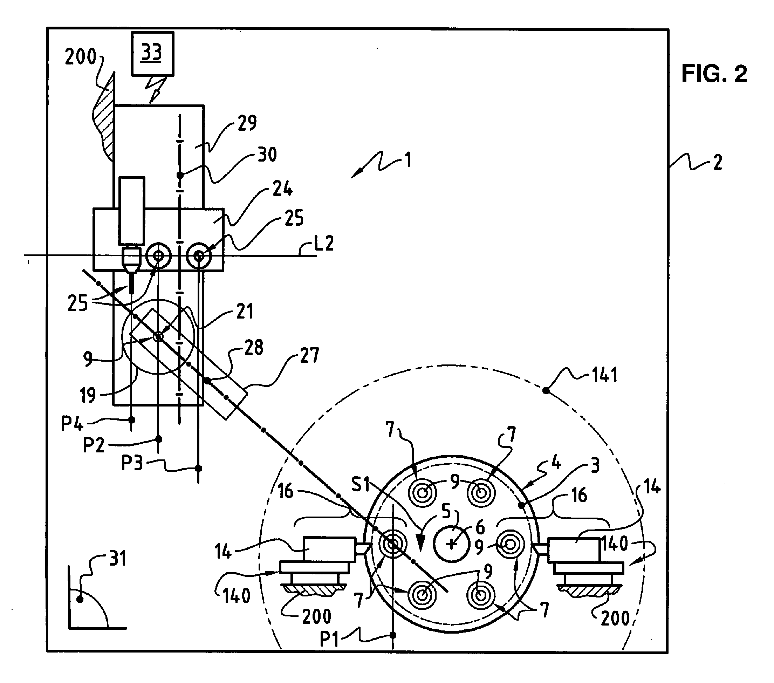

Sur le dessin (figures 2 à 6), afin de faciliter la lecture, seuls deux blocs d'usinage avants 14 ont été représentés, mais en général la machine-outil 2 en comporte de nombreux autres et la présence de ces blocs d'usinage avants 14 pose un problème notable pour la mise en oeuvre d'un ou de plusieurs blocs d'usinage arrières 24.

En résumé, la machine-outil 2 destinée à être équipée selon l'invention est munie :
- d'un barillet 4 qui porte une pluralité de broches 7 munies chacune d'une première pince 8 destinée à serrer une pièce 9 pour permettre l'usinage d'une partie avant 91 de cette pièce 9, notamment, lors de la rotation de ladite pièce 9 autour d'un deuxième axe 10, la rotation du barillet 4 autour d'un premier axe 6 étant, par un ensemble moteur 40, commandée d'une manière fractionnée, notamment dans un sens premier prédéterminé (S1), de manière à présenter les broches 9 devant différents postes d'usinage 16 dont les situations angulaires sont prédéfinies,
- de plusieurs blocs d'usinage d'un premier type, dits blocs d'usinage avants 14 qui, portant chacun au moins un premier outil d'usinage 15, sont prévus pour l'usinage de ladite partie avant 91 au niveau d'au moins certains des postes d'usinage 16,
- d'au moins une contre-broche 19 munie d'une deuxième pince 20 qui, montée rotative autour d'un troisième axe 21, est portée par un premier dispositif de guidage et de déplacement en translation 22 selon une première direction 23 parallèle au dit deuxième axe 10 de manière à, par un mouvement aller et retour de translation, autoriser le prélèvement d'une pièce 9 dans une broche 7 prédéterminée située en vis-à-vis, et ce, en vue de permettre la réalisation ultérieure d'une reprise d'usinage par maintien de ladite pièce 9 par une partie arrière 92, et
- d'au moins un bloc d'usinage d'un second type, dit bloc d'usinage arrière 24, qui est muni d'au moins un deuxième outil d'usinage 25 et est prévu pour réaliser au moins un usinage de la partie arrière 92 d'une pièce 9 maintenue par ladite au moins une contre-broche 19.

Le premier dispositif de guidage et de déplacement en translation 22 est placé sous l'influence d'un premier dispositif de commande 26 qui permet d'engendrer des déplacements de valeurs et de sens prédéterminés.

L'influence du premier dispositif de commande 26 sur le premier dispositif de guidage et de déplacement en translation 22 est symbolisée par une courte flèche brisée orientée vers le dit dispositif de guidage et de déplacement en translation 22.

La machine-outil 2 telle que décrite jusqu'ici est conventionnelle et permet l'usinage multipostes des parties avants 91 des pièces 9.

On admettra que la zone d'usinage 3 de la machine-outil 2 occupe un premier volume substantiellement cylindrique de révolution qui est coaxial au premier axe 6 de rotation et englobe lesdits deuxièmes axes de rotation 10 de la pluralité de broches 7.

La zone d'usinage 3 a été représentée par un trait fin interrompu auquel le repère 3 est associé.

En consultant le dessin, on note que les blocs d'usinage avants 14 sont répartis sensiblement radialement autour du premier volume d'enveloppe cylindrique de la zone d'usinage 3 et en bout de ce volume, en face du barillet 4.

Les blocs d'usinage avant 14 s'inscrivent donc dans un second volume d'enveloppe cylindrique 141 coaxial audit premier volume cylindrique de la zone d'usinage 3.

Tel que cela a déjà été indiqué, la machine-outil 2 destinée à être équipée du dispositif de l'invention comprend au moins un bloc d'usinage d'un second type, dit bloc d'usinage arrière 24, qui est muni d'au moins un deuxième outil d'usinage 25 et est prévu pour réaliser au moins un usinage de la partie arrière 92 d'une pièce 9 maintenue par ladite au moins une contre-broche 19.

Les deuxièmes outils 25 d'usinage peuvent être fixes ou tournants et peuvent être prévus pour un usinage intérieur ou extérieur de la partie arrière 92 de la pièce 9.

Afin de disposer d'un volume accru pour placer les blocs d'usinage arrières 24, le dispositif selon l'invention est remarquable en ce que :
- au moins une contre-broche 19 qu'il comprend est portée par un deuxième dispositif de guidage et de déplacement en translation 27, et ce,
   - d'une part, de manière telle qu'une pièce 9 saisie par la dite contre-broche 19 puisse être déplacée parallèlement à elle-même dans une deuxième direction 28 qui est radiale au dit deuxième axe 10 de rotation de la broche 7 dans laquelle elle doit effectuer une opération de reprise d'une pièce 9, et
   - d'autre part, entre au moins deux positions P1, P2 situées sur cette deuxième direction 28, dont une position P1 dite position d'extraction P1 permettant l'extraction d'une pièce 9 d'une broche 7 prédéterminée qui la porte et au moins une autre position P2 dite position de transfert P2 destinée à autoriser la réalisation d'un usinage arrière par un deuxième outil d'usinage 25, cette position de transfert P2 étant rejetée au-delà de la zone d'usinage 3 et des blocs d'usinage avants 14, et
- ledit au moins un bloc d'usinage arrière 24 est porté par un troisième dispositif de guidage et de déplacement en translation 29, et ce, dans une troisième direction 30 située dans un plan qui, dit premier plan 31, est sécant audit deuxième axe 10 de rotation de la broche 7 dans laquelle elle doit effectuer une opération de reprise d'une pièce 9, ladite troisième direction étant orientée par rapport à ladite deuxième direction 28 de manière telle que, par déplacements relatifs du bloc d'usinage arrière 24 et de la contre-broche 19, les éléments que sont,
   - d'une part, au moins un deuxième outil d'usinage 25 prévu pour réaliser au moins un usinage de la partie arrière 92 d'une pièce 9 tenue par ladite au moins une contre-broche 19 et,
   - d'autre part, au moins une telle pièce 9,
peuvent être positionnés relativement l'un par rapport à l'autre pour autoriser un tel usinage de la partie arrière 92 de ladite pièce 9 lorsqu'elle est déplacée selon la deuxième direction 28, dans au moins une position de transfert P2.

Ces particularités architecturales apparaissent, notamment, en figures 2 à 5.

Le fait que ladite au moins une contre-broche 19 soit portée par un dispositif de guidage et de déplacement en translation dans une deuxième direction 28 qui est radiale au deuxième axe 10 permet d'éloigner notablement ladite au moins une contre-broche 19 dudit deuxième axe 10 pour la rapprocher d'un bloc d'usinage arrière 24 qui peut être placé en une situation notablement écartée de la zone d'usinage 3 et dudit second volume 141 dans lequel sont inscrits les blocs d'usinage avants 14.

Sur les figures 2 à 6, on voit un bloc d'usinage arrière 24 qui porte des deuxièmes outils 25 pour l'usinage axial ou radial de la pièce 9.

Cette configuration du dispositif 1 d'usinage en contre-opération libère donc la zone d'usinage 3 de la machine-outil 2 et permet d'augmenter sa capacité à réaliser de nombreux usinages sur une même pièce 9.

Cette configuration est choisie pour éviter tout risque de conflit entre un des blocs d'usinage avants 14 et ledit au moins un bloc d'usinage arrière 24.

Cette configuration permet de gagner du temps non productif car chaque pièce 9 déplacée par une contre-broche 19 peut être déplacée cependant qu'un outil d'usinage arrière 25 est lui même déplacé pour être positionné en vue de l'usinage de ladite pièce 9.

Le dispositif d'usinage en contre-opération selon l'invention est également remarquable en ce que :
- d'une part, il comprend,
   - au moins un deuxième dispositif de commande 32 d'au moins un deuxième dispositif de guidage et de déplacement en translation 27 d'une contre-broche 19 et,
   - au moins un troisième dispositif de commande 33 d'au moins un troisième dispositif de guidage et de déplacement en translation 29 d'un deuxième outil d'usinage 25, et
- d'autre part, les dits deuxième 32 et troisième 33 dispositifs de commande 32, 33 sont conçus pour engendrer des déplacements dont les valeurs et les sens ont été préalablement prédéterminés.

Avantageusement, les deuxième (32) et troisième (33) dispositifs de commande indexée 32, 33 sont des dispositifs de type à commande numérique placés sous l'influence et le contrôle d'une unité de commande centrale non représentée, cette unité de commande centrale gérant également, notamment, le fonctionnement de l'ensemble moteur 40 du barillet 4.

Quoi qu'il en soit, la configuration précitée permet de réaliser un centrage numérique de chaque contre-broche 19 portée par un deuxième dispositif de guidage et de déplacement en translation 27, par rapport à un deuxième outil 25 porté par un bloc d'usinage arrière 24.

De manière notable, ledit premier plan 31 est sensiblement orthogonal audit deuxième axe 10 de rotation.

Suivant une première forme de réalisation (figure 2), le dispositif d'usinage en contre-opération comprend une seule contre-broche 19 portée par un deuxième dispositif de guidage et de déplacement en translation 27.

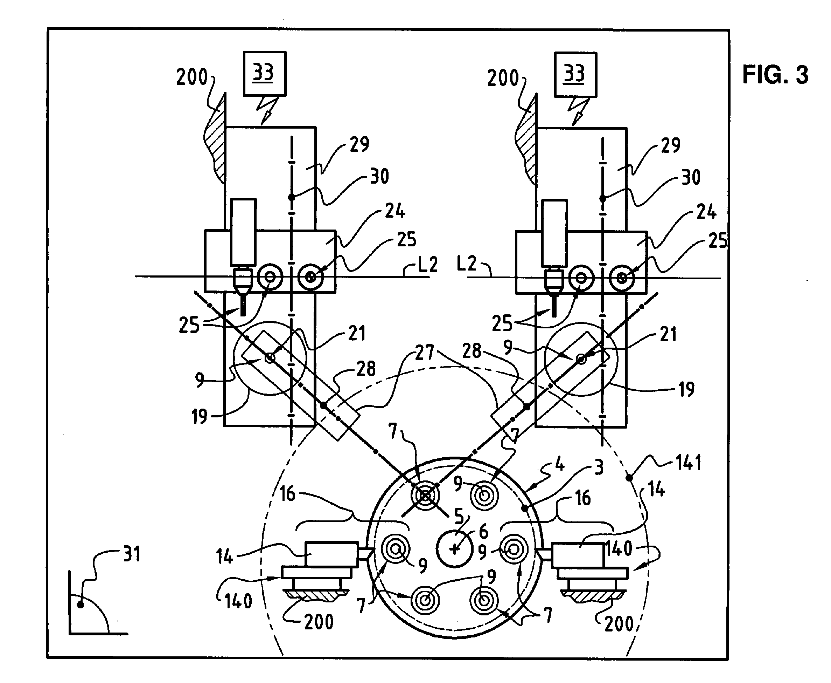

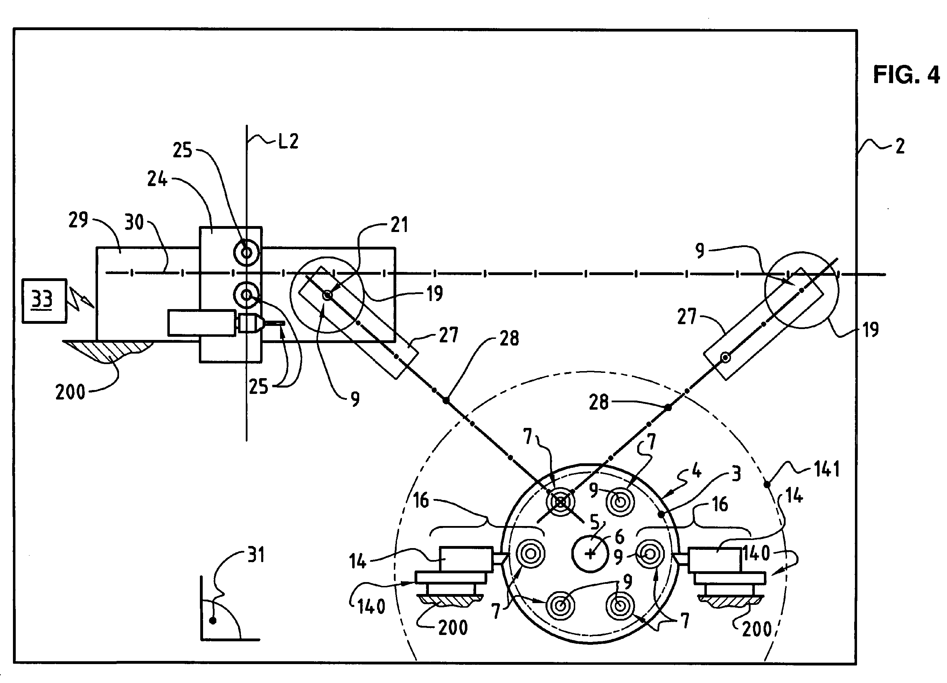

Selon une deuxième forme de réalisation (figures 3 et 4) le dispositif d'usinage en contre-opération comprend au moins un ensemble de deux contre-broches (19), et :
- ces contre-broches (19) sont portées par deux deuxièmes dispositifs de guidage et de déplacement en translation (27) qui sont distincts et qui sont orientés de manière telle que les deuxièmes directions (28) qu'ils définissent sont radiales à un seul deuxième axe (10) de rotation d'une broche (7) située en un poste d'usinage (16) prédéterminé, et
- lesdits deuxième et troisième dispositifs de commande (32, 33) gèrent le fonctionnement des deux deuxièmes dispositifs de guidage et de déplacement en translation (27) distincts, de manière telle que les contre-broches (19) portées par chacun de ces dispositifs de guidage et de déplacement en translation (27) prélèvent séquentiellement des pièces (9) en un même poste d'usinage (16), et ce, en relation avec la rotation fractionnée du barillet (4) sous l'effet de son ensemble moteur (40).

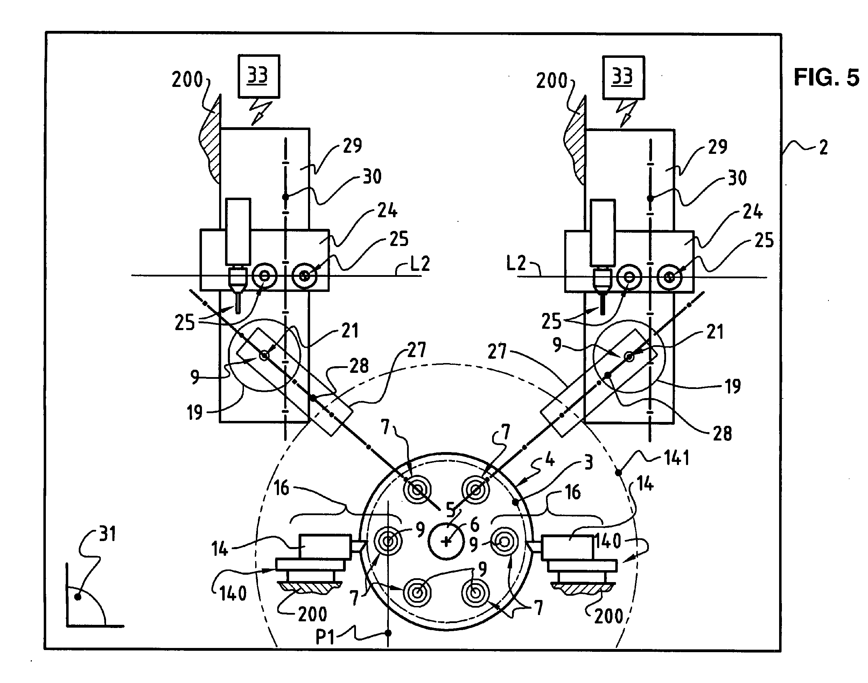

Conformément à une troisième forme de réalisation (figure 5), le dispositif d'usinage en contre-opération comprend au moins un ensemble de deux contre-broches (19), et :
- ces contre-broches (19) sont portées par deux deuxièmes dispositifs de guidage et de déplacement en translation (27) distincts qui sont orientés de manière que telle les deuxièmes directions (28) qu'ils définissent sont radiales à des deuxièmes axes (10) de rotation de deux broches (7) distinctes situées en deux postes d'usinage prédéterminés, et
- les deuxième et troisième dispositifs de commande (32, 33) gèrent le fonctionnement des deux deuxièmes dispositifs de guidage et de déplacement en translation (27) distincts de manière telle que les contre-broches (19) portées par chacun de ces dispositifs de guidage et de déplacement en translation (27) prélèvent les pièces (9) en deux postes d'usinage (16) distincts, et ce, en relation avec la rotation fractionnée du barillet (4) sous l'effet de son ensemble moteur (40).

Selon une première variante de l'une quelconque des trois formes de réalisation précitées, en projection géométrique dans le premier plan (31), au moins une troisième direction (30) est parallèle à au moins une deuxième direction (28).

Dans ce cas, lorsque le bloc d'usinage arrière 24 porte plusieurs deuxièmes outils d'usinage 25 :
- d'une part, sur ce bloc d'usinage arrière 24, les deuxièmes outils 25 sont disposés avec un certain espacement et selon une première ligne L1 sensiblement superposée à la dite deuxième 28 direction, et
- d'autre part, par l'effet du troisième dispositif de guidage et de déplacement en translation 29 du bloc d'usinage arrière 24 qui porte la pluralité d'outils, ledit bloc d'usinage arrière 24 est mobile dans autant de positions de transfert P2, P3, P4 que ledit bloc d'usinage arrière 24 porte de deuxièmes outils 25.

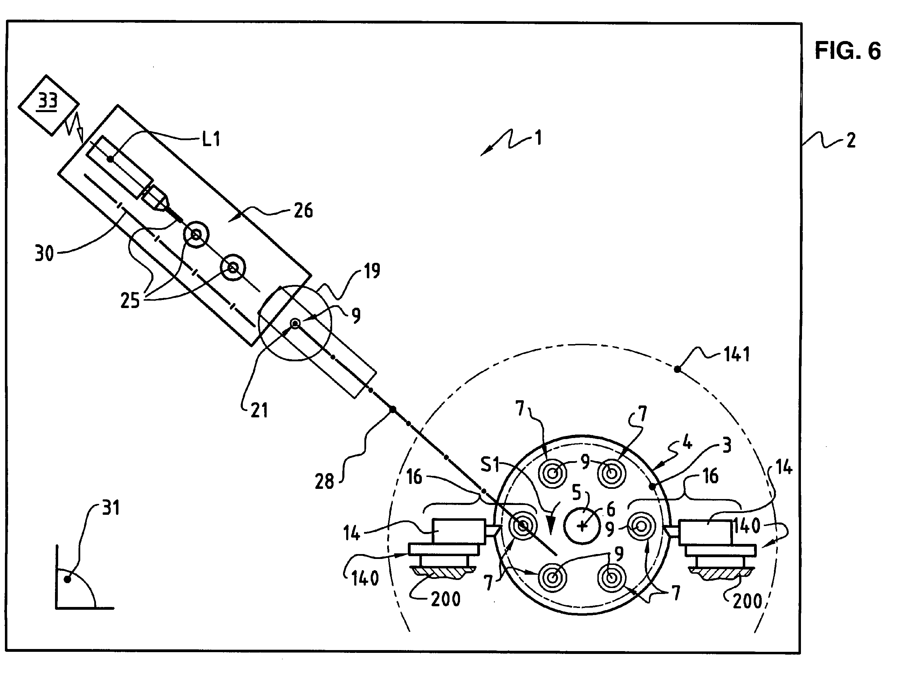

Une première variante de la première forme de réalisation (ci-dessus décrite) est représentée en figure 6.

Selon une deuxième variante de l'une quelconque des trois formes de réalisation précitées, en projection géométrique dans le premier plan (31), au moins une troisième direction (30) est sécante à au moins une deuxième directions (28) (figures 2 à 5).

Dans ce cas, lorsqu'un bloc d'usinage arrière 24 porte plusieurs deuxièmes outils d'usinage 25 :
- d'une part, sur ce bloc d'usinage arrière 24, les deuxièmes outils 25 sont disposés avec un certain espacement et selon au moins une deuxième ligne L2 qui est sécante à la dite deuxième direction 28, et
- d'autre part, par l'effet du troisième dispositif de guidage et de déplacement en translation 29 du bloc d'usinage arrière 24 qui porte la pluralité d'outils, ledit bloc d'usinage arrière 24 est mobile dans autant de positions de transfert P2, P3, P4 que ledit bloc d'usinage arrière 24 porte de deuxièmes outils 25.

Selon une première forme préférée de réalisation de la deuxième ou de la troisième forme de réalisation ci-dessus indiquées dans la deuxième variante, le dispositif d'usinage en contre-opération est remarquable en ce que :
- en projection géométrique dans le premier plan (31), la troisième direction (30) est sécante à chacune des deux deuxièmes directions (28), et
- il comprend au moins un bloc d'usinage arrière 24 porté par un troisième dispositif de guidage et de déplacement en translation 29, et ce, dans ladite troisième direction 30 sécante auxdites deux deuxièmes directions 28.

Egalement dans ce cas, lorsqu'un bloc d'usinage arrière 24 porte plusieurs deuxièmes outils d'usinage 25 :
- d'une part, sur ce bloc d'usinage arrière 24, les deuxièmes outils 25 sont disposés avec un certain espacement et selon au moins une deuxième ligne L2 qui est sécante à la dite deuxième direction 28, et
- d'autre part, par l'effet du troisième dispositif de guidage et de déplacement en translation 29 du bloc d'usinage arrière 24 qui porte la pluralité d'outil, ledit bloc d'usinage arrière 24 est mobile dans autant de positions de transfert P2, P3, P4 que ledit bloc d'usinage arrière 24 porte de deuxièmes outils 25.

L'invention se rapporte également à une machine-outil qui comprend au moins un dispositif 1 d'usinage en contre-opération tel que précédemment défini.

Les dispositifs de commande indexée dits premier dispositif de commande 26, deuxième dispositif de commande 32 et troisième dispositif de commande 33, font avantageusement partie d'une unité de commande centrale de la machine-outil 2 équipée.

## Revendications

1. Dispositif (1) d'usinage en contre-opération pour machine-outil (2) muni,
- d'un barillet (4) qui porte une pluralité de broches (7) munies chacune d'une première pince (8) destinée à serrer une pièce (9) pour permettre l'usinage d'une partie avant (91) de cette pièce (9), notamment, lors de la rotation de ladite pièce (9) autour d'un deuxième axe (10), la rotation du barillet (4) autour d'un premier axe (6) étant, par un ensemble moteur (40), commandée d'une manière fractionnée, notamment dans un sens premier prédéterminé (S1), de manière à présenter les broches (9) devant différents postes d'usinage (16) dont les situations angulaires sont prédéfinies,
- de plusieurs blocs d'usinage d'un premier type, dits blocs d'usinage avants (14) qui, portant chacun au moins un premier outil d'usinage (15), sont prévus pour l'usinage de ladite partie avant (91) au niveau d'au moins certains des postes d'usinage (16),
- d'au moins une contre-broche (19) munie d'une deuxième pince (20) qui, montée rotative autour d'un troisième axe (21), est portée par un premier dispositif de guidage et de déplacement en translation (22) selon une première direction (23) parallèle au dit deuxième axe (10) de manière à, par un mouvement aller et retour de translation, autoriser le prélèvement d'une pièce (9) dans une broche (7) prédéterminée située en vis-à-vis, et ce, en vue de permettre la réalisation ultérieure d'une reprise d'usinage par maintien de ladite pièce (9) par une partie arrière (92), et
- d'au moins un bloc d'usinage d'un second type, dit bloc d'usinage arrière (24), qui est muni d'au moins un deuxième outil d'usinage (25) et est prévu pour réaliser au moins un usinage de la partie arrière (92) d'une pièce (9) maintenue par ladite au moins une contre-broche (19),
ce dispositif (1) d'usinage en contre-opération étant **caractérisé en ce que** :
- au moins une contre-broche (19) qu'il comprend est portée par un deuxième dispositif de guidage et de déplacement en translation (27), et ce,
. d'une part, de manière telle qu'une pièce (9) saisie par la dite contre-broche (19) puisse être déplacée parallèlement à elle-même dans une deuxième direction (28) qui est radiale au dit deuxième axe (10) de rotation de la broche (7) dans laquelle elle doit effectuer une opération de reprise d'une pièce (9), et
. d'autre part, entre au moins deux positions (P1, P2) situées sur cette deuxième direction (28), dont une position (P1) dite position d'extraction (P1) permettant l'extraction d'une pièce (9) d'une broche (7) prédéterminée qui la porte et au moins une autre position (P2) dite position de transfert (P2) destinée à autoriser la réalisation d'un usinage arrière par un deuxième outil d'usinage (25), cette position de transfert (P2) étant rejetée au-delà de la zone d'usinage (3) et des blocs d'usinage avants (14), et
- ledit au moins un bloc d'usinage arrière (24) est porté par un troisième dispositif de guidage et de déplacement en translation (29), et ce, dans une troisième direction (30) située dans un plan qui, dit premier plan (31), est sécant audit deuxième axe (10) de rotation de la broche (7) dans laquelle elle doit effectuer une opération de reprise d'une pièce (9), ladite troisième direction étant orientée par rapport à ladite deuxième direction (28) de manière telle que, par déplacements relatifs du bloc d'usinage arrière (24) et de la contre-broche (19), les éléments que sont,
. d'une part, au moins un deuxième outil d'usinage (25) prévu pour réaliser au moins un usinage de la partie arrière (92) d'une pièce (9) tenue par ladite au moins une contre-broche (19) et,
. d'autre part, au moins une telle pièce (9),
peuvent être positionnés relativement l'un par rapport à l'autre pour autoriser un tel usinage de la partie arrière (92) de ladite pièce (9) lorsqu'elle est déplacée selon la deuxième direction (28), dans au moins une position de transfert (P2).

2. Dispositif d'usinage en contre-opération selon la revendication 1, **caractérisé en ce que** :
- d'une part, il comprend,
. au moins un deuxième dispositif de commande (32) d'au moins un deuxième dispositif de guidage et de déplacement en translation (27) d'une contre-broche (19) et,
. au moins un troisième dispositif de commande (33) d'au moins un troisième dispositif de guidage et de déplacement en translation (29) d'un deuxième outil d'usinage (25), et
- d'autre part, les dits deuxième (32) et troisième (33) dispositifs de commande (32, 33) sont conçus pour engendrer des déplacements dont les valeurs et les sens ont été préalablement prédéterminés.

3. Dispositif d'usinage en contre-opération selon la revendication 1 ou 2, **caractérisé en ce que** ledit premier plan (31) est sensiblement orthogonal audit deuxième axe (10) de rotation.

4. Dispositif d'usinage en contre-opération selon l'une quelconque des revendications 1 à 3, **caractérisé en ce que** le dispositif d'usinage en contre-opération comprend une seule contre-broche (19) portée par un deuxième dispositif de guidage et de déplacement en translation (27).

5. Dispositif d'usinage en contre-opération selon l'une quelconque des revendications 1 à 3, **caractérisé en ce qu**'il comprend au moins un ensemble de deux contre-broches (19), et :
- ces contre-broches (19) sont portées par deux deuxièmes dispositifs de guidage et de déplacement en translation (27) qui sont distincts et qui sont orientés de manière telle que les deuxièmes directions (28) qu'ils définissent sont radiales à un seul deuxième axe (10) de rotation d'une broche (7) située en un poste d'usinage (16) prédéterminé, et
- lesdits deuxième et troisième dispositifs de commande (32, 33) gèrent le fonctionnement des deux deuxièmes dispositifs de guidage et de déplacement en translation (27) distincts, de manière telle que les contre-broches (19) portées par chacun des ces dispositifs de guidage et de déplacement en translation (27) prélèvent séquentiellement des pièces (9) en un même poste d'usinage (16), et ce, en relation avec la rotation fractionnée du barillet (4) sous l'effet de son ensemble moteur (40).

6. Dispositif d'usinage en contre-opération selon l'une quelconque des revendications 1 à 3, **caractérisé en ce qu**'il comprend au moins un ensemble de deux contre-broches (19), et :
- ces contre-broches (19) sont portées par deux deuxièmes dispositifs de guidage et de déplacement en translation (27) distincts qui sont orientés de manière telle que les deuxièmes directions (28) qu'ils définissent sont radiales à des deuxièmes axes (10) de rotation de deux broches (7) distinctes situées en deux postes d'usinage prédéterminé, et
- les deuxième et troisième dispositifs de commande (32, 33) gèrent le fonctionnement des deux deuxièmes dispositifs de guidage et de déplacement en translation (27) distincts de manière telle que les contre-broches (19) portées par chacun de ces dispositifs de guidage et de déplacement en translation (27) prélèvent les pièces (9) en deux postes d'usinage (16) distincts, et ce, en relation avec la rotation fractionnée du barillet (4) sous l'effet de son ensemble moteur (40).

7. Dispositif d'usinage en contre-opération selon l'une quelconque des revendications 1 à 6, **caractérisé en ce qu**'en projection géométrique dans le premier plan (31), au moins une troisième direction (30) est parallèle à au moins une deuxième direction (28).

8. Dispositif d'usinage en contre-opération selon la revendication 7, **caractérisé en ce que** dans ce cas, lorsque le bloc d'usinage arrière (24) porte plusieurs deuxièmes outils d'usinage (25) :
- d'une part, sur ce bloc d'usinage arrière (24), les deuxièmes outils (25) sont disposés avec un certain espacement et selon une première ligne (L1) sensiblement superposée à la dite deuxième (28) direction, et
- d'autre part, par l'effet du troisième dispositif de guidage et de déplacement en translation (29) du bloc d'usinage arrière (24) qui porte la pluralité d'outils, ledit bloc d'usinage arrière (24) est mobile dans autant de positions de transfert (P2, P3, P4) que ledit bloc d'usinage arrière (24) porte de deuxièmes outils (25).

9. Dispositif d'usinage en contre-opération selon l'une quelconque des revendications 1 à 6, **caractérisé en ce qu**'en projection géométrique dans le premier plan (31), au moins une troisième direction (30) est sécante à au moins une deuxième direction (28).

10. Dispositif d'usinage en contre-opération selon la revendication 9, **caractérisé en ce que** dans ce cas, lorsqu'un bloc d'usinage arrière (24) porte plusieurs deuxièmes outils d'usinage (25) :
- d'une part, sur ce bloc d'usinage arrière (24), les deuxièmes outils (25) sont disposés avec un certain espacement et selon au moins une deuxième ligne (L2) qui est sécante à la dite deuxième direction (28), et
- d'autre part, par l'effet du troisième dispositif de guidage et de déplacement en translation (29) du bloc d'usinage arrière (24) qui porte la pluralité d'outils, ledit bloc d'usinage arrière (24) est mobile dans autant de positions de transfert (P2, P3, P4) que ledit bloc d'usinage arrière (24) porte de deuxièmes outils (25).

11. Dispositif d'usinage en contre-opération selon la revendication 5 ou 6, **caractérisé en ce que** :
- en projection géométrique dans le premier plan (31), la troisième direction (30) est sécante à chacune des deux deuxièmes directions (28), et
- il comprend au moins un bloc d'usinage arrière (24) porté par un troisième dispositif de guidage et de déplacement en translation (29), et ce, dans ladite troisième direction (30) sécante auxdites deux deuxièmes directions (28).

12. Dispositif d'usinage en contre-opération selon la revendication 11, **caractérisé en ce que**, dans ce cas, lorsqu'un bloc d'usinage arrière (24) porte plusieurs deuxièmes outil d'usinage (25) :
- d'une part, sur ce bloc d'usinage arrière (24), les deuxièmes outils (25) sont disposés avec un certain espacement et selon au moins une deuxième ligne (L2) qui est sécante à la dite deuxième direction (28), et
- d'autre part, par l'effet du troisième dispositif de guidage et de déplacement en translation (29) du bloc d'usinage arrière (24) qui porte la pluralité d'outils, ledit bloc d'usinage arrière (24) est mobile dans autant de positions de transfert (P2, P3, P4) que ledit bloc d'usinage arrière (24) porte de deuxièmes outils (25).

13. Machine-outil **caractérisée en ce qu**'elle comprend au moins un dispositif (1) d'usinage en contre-opération selon l'une quelconque des revendications 1 à 12.

## Claims

1. Machining device (1) with counter-operation for machine tool (2) equipped
- with a drum turret (4) which bears a plurality of spindles (7) each equipped with a first clamp (8) intended to chuck a piece (9) to allow the machining of a fore-part (91) of this piece, in particular during the rotation of said piece (9) about a second axis (10), the rotation of the drum turret (4) about a first axis (6) being controlled, through a motor assembly (40), controlled in a fractionated way, in particular in a first predetermined direction (S1), in such a way as to present the spindles before different machining stations (16) whose angular positions are predefined,
- with a plurality of machining blocks of a first type, referred to as front machining blocks (14) which, each bearing at least one first machining tool (15), are intended for machining said fore-part (91) at the level of at least certain machining stations (16),
- with at least one counter-spindle (19) equipped with a second clamp (20) which, rotary mounted about a third axis (21), is borne by a first device for guiding and displacement in translation (22) according to a first direction (23) parallel to said second axis (10) in such a way as to allow, through a back and forth translation movement, the withdraw of a piece (9) in a predetermined spindle (7) situated vis-a-vis, and this with a view to permitting the subsequent achievement of an operation of machining by holding said piece (9) by a rear part (92), and
- with at least one machining block of a second type, referred to as rear machining block (24), which is equipped with at least one second machining tool (25) and is intended to achieve at least one machining of the rear part (92) of a piece (9) held by said at least one counter-spindle (19),
this machining device with counter-operation being **characterised in that**:
- at least one counter-spindle (19) which it comprises is borne by a second device for guiding and displacement in translation (27), and this
• on the one hand, in such a way that a piece (9) seized by said counter-spindle (19) is able to be placed parallel to the former in a second direction (28) which is radial to said second axis (10) of rotation of the spindle (7) in which it must carry out an operation of taking of a piece (9), and
• on the other hand, between at least two positions (P1, P2) situated in this second direction (28), being a position (P1) referred to as position of extraction (P1) allowing the extraction of a piece (9) from a predetermined spindle (7) which bears it and at least one other position (P2), referred to as transfer position (P2) intended to allow the achievement of a rear machining by a second machining tool (25), this transfer position (P2) being excluded beyond the machining zone (3) and the front machining blocks (14), and
- said at least one rear machining block (24) is borne by a third device for guiding and displacement in translation (29), and this in a third direction (30) situated in a plane which, referred to as first plane (31), is intersecting with respect to said second axis (10) of rotation of the spindle (7) in which it must carry out an operation of retaking of a piece (9), said third direction being oriented with respect to said second direction (28) in such a way that, through relative displacements of the rear machining block (24) and of the counter-spindle (19), the elements that are
• on the one hand, at least one second machining tool (25) intended to achieve at least one machining of the rear part (92) of a piece (9) held by said at least one counter-spindle (19), and
• on the other hand, at least one such piece (9),
can be positioned relatively, one with respect to the other, to allow such a machining of the rear part (92) of a piece (9) when it is displaced according to the second direction (28) in at least one transfer position (P2).

2. Machining device with counter-operation according to claim 1, **characterised in that**:
- on the one hand, it comprises
• at least one second control device (32) for at least one second device for guiding and displacement in translation (27) of a counter-spindle (25), and
• at least a third control device (33) for at least one third device for guiding and displacement in translation (29) of a second machining tool (25), and
- on the other hand, said second (32) and third (33) control devices (32, 33) are known to bring about displacements of which the values and the directions have been predetermined beforehand.

3. Machining device with counter-operation according to claim 1 or 2, **characterised in that** said first plane (31) is substantially orthogonal to said second axis (10) of rotation.

4. Machining device with counter-operation according to any one of the claims 1 to 3, **characterised in that** the machining device with counter-operation comprises a sole counter-spindle (19) borne by a second device for guiding and displacement in translation (27).

5. Machining device with counter-operation according to any one of the claims 1 to 3, **characterised in that** it comprises at least one set of two counter-spindles (19), and:
- these counter-spindles (19) are borne by two second devices for guiding and displacement in translation (27) which are separate and are oriented in a manner such that the two directions (28) that they define are radial to a single second axis (10) of rotation of a spindle (7) situated at a predetermined machining station (16), and
- said second and third control devices (32, 33) manage the operation of the two separate devices for guiding and displacement in translation (27) in such a way that the counter-spindles (19) borne by each of these devices for guiding and displacement in translation (27) sequentially withdraw the pieces (9) at a same machining station (16) and this in relation to the fractionated rotation of the drum turret (4) under the effect of its motor assembly (40).

6. Machining device with counter-operation according to any one of the claims 1 to 3, **characterised in that** it comprises at least one set of two counter-spindles (19), and:
- these counter-spindles (19) are borne by two separate second devices for guiding and displacement in translation (27) which are oriented in a manner such that the two directions (28) that they define are radial to the second axes (10) of rotation of the two separate spindles (7) situated at two predetermined machining stations (16), and
- the second and third control devices (32, 33) manage the operation of the two separate devices for guiding and displacement in translation (27) in such a way that the counter-spindles (19) borne by each of these devices for guiding and displacement in translation (27) withdraw the pieces (9) at two separate machining stations (16), and this in relation to the fractionated rotation of the drum turret (4) under the effect of its motor assembly (40).

7. Machining device with counter-operation according to any one of the claims 1 to 6, **characterised in that** in geometric projection in the first plane (31) at least one third direction (30) is parallel to at least one second direction (28).

8. Machining device with counter-operation according to claim 7, **characterised in that** in this case, when the rear machining block (24) bears a plurality of second tools (25):
- on the one hand, on this rear machining block (24), the second tools (25) are disposed with a certain spacing and according to a second line (L1) substantially superimposed on said second (28) direction, and
- on the other hand, through the effect of the third device for guiding and displacement in translation (29) of the rear machining block (24) which bears the plurality of tools, said rear machining block (24) is mobile in as many positions of transfer (P2, P3, P4) as said rear machining block (24) bears second tools (25).

9. Machining device with counter-operation according to any one of the claims 1 to 6, **characterised in that** in geometric projection in the first plane (31) at least one third direction (30) is intersecting with respect to at least one second direction (28).

10. Machining device with counter-operation according to claim 9, **characterised in that** in this case, when the rear machining block (24) bears a plurality of second machining tools (25):
- on the one hand, on this rear machining block (24), the second tools (25) are disposed with a certain spacing and according to at least one second line (L2) which is intersecting with respect to said second direction (28), and
- on the other hand, through the effect of the third device for guiding and displacement in translation (29) of the rear machining block (24) which bears the plurality of tools, said rear machining block (24) is mobile in as many positions of transfer (P2, P3, P4) as said rear machining block (24) bears second tools (25).

11. Machining device with counter-operation according to claim 5 or 6, **characterised in that**:
- in geometric projection in the first plane (31) the third direction (30) is intersecting with respect to each of the two second directions (28), and
- it comprises at least one rear machining block (24) borne by a third device for guiding and displacement in translation (29), and this in said third direction (30) intersecting with respect to said two second directions (28).

12. Machining device with counter-operation according to claim 11, **characterised in that** in this case, when the rear machining block (24) bears a plurality of second machine tools (25):
- on the one hand, on this rear machining block (24), the second tools (25) are disposed with a certain spacing and according to a second line (L1) substantially superimposed on said second (28) direction, and
- on the other hand, through the effect of the third device for guiding and displacement in translation (29) of the rear machining block (24) which bears the plurality of tools, said rear machining block (24) is mobile in as many positions of transfer (P2, P3, P4) as said rear machining block (24) bears second tools (25).

13. Machining tool **characterised in that** it comprises at least one machining device (1) with counter-operation according to any one of the claims 1 to 12.

## Patentansprüche

1. Gegenbearbeitungsvorrichtung (1) für eine Werkzeugmaschine (2), die mit Folgendem versehen ist:
- mit einem Revolver (4), der eine Mehrzahl von Spindeln (7) hält, von denen jede mit einer ersten Greiferzange (8) versehen ist, die dazu dient, ein Werkstück (9) einzuspannen, um die Bearbeitung eines vorderen Teils (91) dieses Werkstücks (9), insbesondere bei Drehung des genannten Werkstücks (9) um eine zweite Achse (10) zu ermöglichen, wobei die Umdrehung des Revolvers (4) um eine erste Achse (6) durch eine Antriebsbaugruppe (40) nach einer Unterteilung insbesondere in eine erste festgelegte Richtung (S1) betätigt wird, so dass die Spindeln (9) vor unterschiedlichen Bearbeitungsstationen (16) positioniert werden, deren Winkellagen festgelegt sind,
- mit mehreren Bearbeitungseinheiten eines ersten Typs, den sogenannten vorderen Bearbeitungseinheiten (14), von den jede mindestens ein erstes Bearbeitungswerkzeug (15) hält und die zur Bearbeitung des genannten vorderen Teils (91) auf mindestens einigen Bearbeitungsstationen (16) bestimmt sind,
- mit mindestens einer Gegenspindel (19), die mit einer zweiten Greiferzange (20) versehen ist, welche drehbar um eine dritte Achse (21) montiert von einer ersten translatorischen Führungs- und Verfahrvorrichtung (22) in einer ersten, zur zweiten Achse (10) parallelen Richtung (23) getragen wird, um durch eine translatorische Hin- und Herbewegung die Entnahme eines Werkstücks (9) aus einer festgelegten, gegenüberliegenden Spindel (7) zu gestatten, und dies zum Zweck der späteren Ausführung einer weiteren Bearbeitung durch Halten des genannten Werkstücks (9) an einem hinteren Teil (92), und
- mit mindestens einer Bearbeitungseinheit eines zweiten Typs, der sogenannten hinteren Bearbeitungseinheit (24), die mindestens mit einem zweiten Bearbeitungswerkzeug (25) versehen und zur Ausführung von mindestens einer Bearbeitung des hinteren Teils (92) eines Werkstücks (9) bestimmt ist, das von mindestens einer genannten Gegenspindel gehalten wird,
wobei diese Gegenbearbeitungsvorrichtung (1) **dadurch gekennzeichnet** wird, dass:
- mindestens eine Gegenspindel (19), die sie aufweist, von einer zweiten translatorischen Führungs- und Verfahrvorrichtung (27) getragen wird, und dies
. einerseits so, dass ein von der genannten Gegenspindel (19) erfasstes Werkstück (9) parallel zu sich selbst in eine zweite Richtung (28) verfahren werden kann, die radial zur genannten zweiten Drehachse (10) der Spindel (7) ist, in der sie einen Arbeitsgang zur Nachbearbeitung eines Werkstücks (9) ausführen muss, und
. andererseits zwischen mindestens zwei Positionen (P1, P2), die auf dieser zweiten Richtung (28) liegen, darunter eine Position (P1), die sogenannte Entnahmeposition (P1), welche die Entnahme eines Werkstücks (9) aus einer festgelegten, es tragenden Spindel (7) ermöglicht und mindestens eine andere Position (P2), die sogenannte Übergabeposition (P2), die dazu bestimmt ist, die Ausführung einer hinteren Bearbeitung durch ein zweites Bearbeitungswerkzeug (25) zu gestatten, wobei diese Übergabeposition (P2) außerhalb des Bearbeitungsbereiches (3) und der vorderen Bearbeitungseinheiten (14) verlegt wird, und
- mindestens eine genannte hintere Bearbeitungseinheit (24) von einer dritten translatorischen Führungs- und Verfahrvorrichtung (29) getragen wird, und dies in einer dritten Richtung (30), die ein einer Ebene, der sogenannten ersten Ebene (31), liegt, welche sich mit der genannten zweiten Drehachse (10) der Spindel (7) schneidet, in der sie einen Arbeitsgang zur Nachbearbeitung eines Werkstücks (9) ausführen muss, wobei die genannte dritte Richtung so zu der genannten zweiten Richtung (28) ausgerichtet ist, dass durch Verfahrbewegungen zur hinteren Bearbeitungseinheit (24) und zur Gegenspindel (19) die Bauteile, die
. einerseits mindestens ein zur Ausführung von mindestens einer Bearbeitung des hinteren Teils (92) eines in mindestens einer genannten Gegenspindel (19) gehaltenen Werkstücks (9) bestimmtes zweites Bearbeitungswerkzeug (25) und
. andererseits mindestens ein solches Werkstück (9) umfassen,
zueinander positioniert werden können, um eine solche Bearbeitung des hinteren Teils (92) des genannten Werkstücks (9) zu gestatten, wenn es in der zweiten Richtung (28) auf mindestens eine Übergabeposition (P2) verfahren wird.

2. Gegenbearbeitungsvorrichtung nach Anspruch 1, **dadurch gekennzeichnet, dass**
- sie einerseits Folgendes aufweist:
. mindestens eine zweite Antriebsvorrichtung (32) von mindestens einer zweiten translatorischen Führungs- und Verfahrvorrichtung (27) einer Gegenspindel (19) und
. mindestens eine dritte Antriebsvorrichtung (33) von mindestens einer dritten translatorischen Führungs- und Verfahrvorrichtung (29) eines zweiten Bearbeitungswerkzeugs (25) und
- andererseits die genannte zweite (32) und dritte (33) translatorische Führungs- und Verfahrvorrichtung (32, 33) so entwickelt wurden, dass sie Verfahrbewegungen erzeugen, deren Werte und Richtungen im Voraus festgelegt worden sind.

3. Gegenbearbeitungsvorrichtung nach Anspruch 1 oder 2, **dadurch gekennzeichnet, dass** die genannte erste Ebene (31) im Wesentlichen senkrecht zur genannten zweiten Drehachse (10) steht.

4. Gegenbearbeitungsvorrichtung nach einem der Ansprüche 1 bis 3, **dadurch gekennzeichnet, dass** die Gegenbearbeitungsvorrichtung eine einzige Gegenspindel (19) aufweist, die von einer zweiten translatorischen Führungs- und Verfahrvorrichtung (27) getragen wird.

5. Gegenbearbeitungsvorrichtung nach einem der Ansprüche 1 bis 3, **dadurch gekennzeichnet, dass** sie mindestens eine Gruppe von zwei Gegenspindeln (19) aufweist und:
- diese Gegenspindeln (19) von zwei zweiten, verschiedenen translatorischen Führungs- und Verfahrvorrichtungen (27) getragen werden, die so ausgerichtet sind, dass die von ihnen bestimmten zweiten Richtungen (28) radial zu einer einzigen zweiten Drehachse (10) einer Spindel (7) verlaufen, die sich an einer festgelegten Bearbeitungsstation (16) liegt, und
- die genannte zweite und dritte Antriebsvorrichtung (32, 33) den Betrieb dieser zweiten, verschiedenen translatorischen Führungs- und Verfahrvorrichtungen (27) so steuern, dass die Gegenspindeln (19), die jeweils von diesen zweiten translatorischen Führungs- und Verfahrvorrichtungen (27) getragen werden, die Werkstücke (9) sequentiell an derselben Bearbeitungsstation (16) entnehmen, und dies in Verbindung mit der unterteilten Umdrehung des Revolvers (4) durch Einwirkung seiner Antriebsgruppe (40).

6. Gegenbearbeitungsvorrichtung nach einem der Ansprüche 1 bis 3, **dadurch gekennzeichnet, dass** sie mindestens eine Gruppe von zwei Gegenspindeln (19) aufweist und:
- diese Gegenspindeln (19) von zwei zweiten, verschiedenen translatorischen Führungs- und Verfahrvorrichtungen (27) getragen werden, die so ausgerichtet sind, dass die von ihnen bestimmten zweiten Richtungen (28) radial zu zweiten Drehachsen (10) von zwei verschiedenen Spindeln (7) verlaufen, die sich an zwei festgelegten Bearbeitungsstationen befinden, und
- die genannte zweite und dritte Antriebsvorrichtung (32, 33) den Betrieb dieser beiden zweiten, verschiedenen translatorischen Führungs- und Verfahrvorrichtungen (27) so steuern, dass die Gegenspindeln (19), die jeweils von diesen zweiten translatorischen Führungs- und Verfahrvorrichtungen (27) getragen werden, die Werkstücke (9) sequentiell an zwei verschiedenen Bearbeitungsstationen (16) entnehmen, und dies in Verbindung mit der unterteilten Umdrehung des Revolvers (4) durch Einwirkung seiner Antriebsgruppe (40).

7. Gegenbearbeitungsvorrichtung nach einem der Ansprüche 1 bis 6, **dadurch gekennzeichnet, dass** in der geometrischen Projektion in die erste Ebene (31) mindestens eine dritte Richtung (30) parallel zu mindestens einer zweiten Richtung (28) ist.

8. Gegenbearbeitungsvorrichtung nach Anspruch 7, **dadurch gekennzeichnet, dass** in diesem Fall, wenn die hintere Bearbeitungseinheit (24) mehrere zweite Bearbeitungswerkzeuge (25) hält:
- einerseits die zweiten Werkzeuge (25) an dieser hinteren Bearbeitungseinheit (24) mit einem bestimmten Abstand und nach einer ersten Linie (L1) angeordnet sind, die sich im Wesentlichen mit der genannten zweiten Richtung (28) deckt, und
- andererseits durch Einwirkung der dritten translatorischen Führungs- und Verfahrvorrichtung (29) der hinteren Bearbeitungseinheit (24), welche die Mehrzahl von Werkzeugen hält, die genannte hintere Bearbeitungseinheit (24) in ebenso viele Übergabepositionen (P2, P2, P4) bewegt werden kann wie die genannte hintere Bearbeitungseinheit (24) zweite Werkzeuge (25) hält.

9. Gegenbearbeitungsvorrichtung nach einem der Ansprüche 1 bis 6, **dadurch gekennzeichnet, dass** in der geometrischen Projektion in die erste Ebene (31) mindestens eine dritte Richtung (30) mindestens eine zweite Richtung (28) schneidet.

10. Gegenbearbeitungsvorrichtung nach Anspruch 9, **dadurch gekennzeichnet, dass** in diesem Fall, wenn die hintere Bearbeitungseinheit (24) mehrere zweite Bearbeitungswerkzeuge (25) hält:
- einerseits die zweiten Werkzeuge (25) an dieser hinteren Bearbeitungseinheit (24) mit einem bestimmten Abstand und nach mindestens einer zweiten Linie (L2) angeordnet sind, welche die genannte zweite Richtung (28) schneidet, und
- andererseits durch Einwirkung der dritten translatorischen Führungs- und Verfahrvorrichtung (29) der hinteren Bearbeitungseinheit (24), welche die Mehrzahl von Werkzeugen hält, die genannte hintere Bearbeitungseinheit (24) in ebenso viele Übergabepositionen (P2, P2, P4) bewegt werden kann wie die genannte hintere Bearbeitungseinheit (24) zweite Werkzeuge (25) hält.

11. Gegenbearbeitungsvorrichtung nach Anspruch 5 oder 6, **dadurch gekennzeichnet, dass**:
- in der geometrischen Projektion in die erste Ebene (31) eine dritte Richtung (30) jede der beiden zweiten Richtungen (28) schneidet und
- sie mindestens eine von einer dritten translatorischen Führungs- und Verfahrvorrichtung (29) getragene hintere Bearbeitungseinheit (24) aufweist, und dies in der genannten dritten Richtung (30), welche die genannten beiden zweiten Richtungen (28) schneidet.

12. Gegenbearbeitungsvorrichtung nach Anspruch 11, **dadurch gekennzeichnet, dass** in diesem Fall, wenn die hintere Bearbeitungseinheit (24) mehrere zweite Bearbeitungswerkzeuge (25) hält:
- einerseits die zweiten Werkzeuge (25) an dieser hinteren Bearbeitungseinheit (24) mit einem bestimmten Abstand und nach mindestens einer zweiten Linie (L2) angeordnet sind, welche die genannte zweite Richtung (28) schneidet, und
- andererseits durch Einwirkung der dritten translatorischen Führungs- und Verfahrvorrichtung (29) der hinteren Bearbeitungseinheit (24), welche die Mehrzahl von Werkzeugen hält, die genannte hintere Bearbeitungseinheit (24) in ebenso viele Übergabepositionen (P2, P3, P4) bewegt werden kann wie die genannte hintere Bearbeitungseinheit (24) zweite Werkzeuge (25) hält.

13. Werkzeugmaschine, **dadurch gekennzeichnet, dass** sie mindestens eine Gegenbearbeitungsvorrichtung (1) nach einem der Ansprüche 1 bis 12 aufweist.
